# EUROPÄISCHE PATENTSCHRIFT

(11) **EP 0 516 965 B1**
(45) Veröffentlichungstag und Bekanntmachung des Hinweises auf die Patenterteilung: **12.04.1995**
(21) Anmeldenummer: 92107111.4
(22) Anmeldetag: 25.04.1992
(51) Int. Cl.: G01G 21/30

(54) **Druckausgleichsmembrane**
Pressure compensating membrane
Membrane pour compensation de pression

(30) Priorität: 05.06.1991 CH 1669/91
(43) Veröffentlichungstag der Anmeldung: 09.12.1992
(73) Patentinhaber: Mettler-Toledo AG, 8606 Greifensee (CH)
(72) Erfinder: Neeleman, Christian, CH-8032 Zürich (CH); Emery, Jean-Christophe, CH-8603 Schwerzenbach (CH)

(56) Entgegenhaltungen:
- EP-A- 0 035 579
- DE-A- 2 745 112
- DE-U- 8 805 063
- GB-A- L8 374

## Beschreibung

Die Erfindung bezieht sich auf eine Wägezelle nach dem Oberbegriff des Anspruchs 1.

### STAND DER TECHNIK

Bei einer bekannten staub- und wassergeschuetzten Waage [EP 00 35 579] ist das Messsytem von einem Schutzgehaeuse vollstaendig eingeschlossen, wobei die Fuesse der Waage durch das Schutzgehaeuse ragen und mit diesem durch ringfoermige Membranen verbunden ist, welche die Abdichtung des Schutzgehaeuses bewirken. Darueberhinaus sind bei Waagen kleiner Hoechstlast Mittel zum Ausgleich von Druckunterschieden vorgesehen. Als solche sind poroese Einsaetze oder Faltenbaelge an der Unterseite des Schutzgehaeuses vorgesehen, welche Oeffnungen desselben zugeordnet sind.

### NACHTEIL DES STANDES DER TECHNIK

Eine solche Anordnung hat jedoch den Nachteil, dass sie in der Praxis sich als zu wenig wirkungsvoll erwiesen hat. Der Faltenbalg ist aufgrund seiner durch die Form bedingten Steifigkeit fuer die relativ sehr kleinen und raschen Druckdifferenzen zwischen dem Aussenraum und dem Innenraum des Schutzgehaeuses weitgehend unwirksam. Insbesondere, wenn rasche Reaktionszeiten der Waage gefordert sind, wie es industrielle Anwendungen, bei welchen die Waage innerhalb einer Prozessapparatur an den Prozessschritten entsprechenden Stellen eingeschaltet ist, bedingen. Die Variante mit der poroesen Abdeckung der Druckausgleichsoeffnung im Schutzgehaeuse hat ausserdem den Nachteil, dass sie wenigstens teilweise unwirksam werden kann, indem sich die Poren mit ev. beim Produktionsprozess entstehendem Staub oder dgl. verlegen koennen und dadurch die Messgenauigkeit abnimmt. Speziell diese Moeglichkeit ist besonders gefaehrlich fuer Prozesse, bei welchen sehr hohe Anforderungen an die Waegegenauigkeit und die Konstanz derselben ueber lange Zeitraeume notwendig sind.

### ZIEL DER ERFINDUNG

Ziel der Erfindung ist daher die Beseitigung dieser Nachteile und die Schaffung einer Waegezelle mit Druckausgleich, welcher auch ueber lange Zeitraeume gleichmaessig und unabhaengig von den umgebenden Staub- oder Feuchtigkeitseinfluessen erhalten bleibt und auch schon bei extrem kleinen Druckdifferenzen wirksam ist.

### ERFINDUNG

Dieses Ziel laesst sich durch die Merkmale des Anspruchs 1 erreichen. Ausserdem koennen die Merkmale der Ansprueche 2 bis 8 verwirklicht werden.

Weitere Einzelheiten und Merkmale der erfindungsgemaessen Druckausgleichseinrichtung ergeben sich aus der Beschreibung von Ausfuehrungsbeispielen anhand der Zeichnung. In dieser zeigt
- Fig.1: eine Druckausgleichseinrichtung 1. Art in 1. Variante,
- Fig.2: eine Druckausgleichseinrichtung 1. Art in 2. Variante,
- Fig.3: eine Druckausgleichseinrichtung 1. Art in 3. Variante,
- Fig.4: eine 2. Art einer Druckausgleichseinrichtung,
- Fig.5: eine 3. Art einer Druckausgleichseinrichtung,
- Fig.6: eine 4. Art einer Druckausgleichseinrichtung.

Bei einer 1. Art einer Druckausgleichseinrichtung ist in einem Schutzgehaeuse fuer eine Messzelle einer Waage ein im wesentlichen prismatischer, das Schutzgehaeuse durchdringender Koerper mit relativ zum Schutzgehaeuse grosser Oberflaeche in diesem angeordnet, wobei die Oberflaeche dieses Durchdringungskoerpers aus einer Druckausgleichsmembrane 2 gebildet ist, welche an ihren freien Kanten mit dem Schutzgehaeuse 1 dicht verbunden ist.

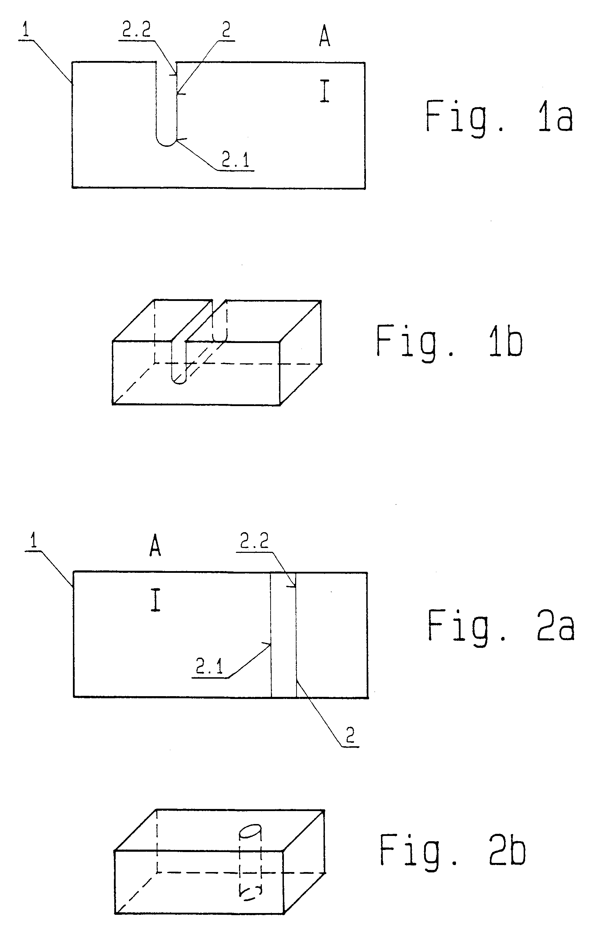

In einer 1. Variante (Fig. 1) einer Druckausgleichseinrichtung 1. Art weist der Durchdringungskoerper eine zylindrisch-u-artige Form auf, deren Mantel von der Druckausgleichsmembrane 2 gebildet ist. Auch hier ist die eine Seite der Druckausgleichsmembrane 2 mit dem Aussenraum A und die andere Seite der Druckausgleichsmembrane 2 mit dem Innenraum I des Schutzgehaeuses 1 in Kontakt.

In einer 2. Variante (Fig. 2) einer Druckausgleichseinrichtung 1. Art weist der Durchdringungskoerper eine zylindrisch-roehrenartige Form auf, welche an ihren Stirnseiten offen und deren Mantel von der Druckausgleichsmembrane 2 gebildet ist. Damit ist ihre eine Seite mit dem Aussenraum A und die andere Seite der Druckausgleichsmembrane 2 mit dem Innenraum I des Schutzgehaeuses 1 in Kontakt.

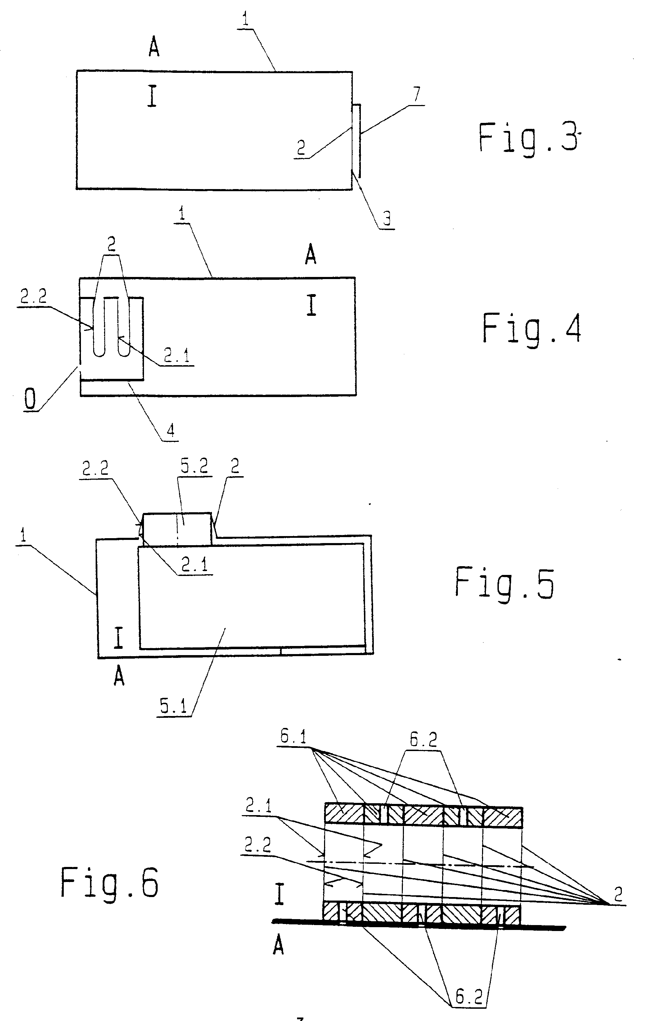

In einer 3. Variante (Fig. 3) einer Druckausgleichseinrichtung 1. Art ist die Druckausgleichsmembrane 2 in einem relativ grossen Fenster 3 einer Stirnseite des Schutzgehaeuses 1 angeordnet und ebenfalls mit den Kanten desselben dicht verbunden. Das Fenster 3 kann aber auch an jeder anderen geeigneten Seitenflaeche des Schutzgehaeuses 1 angeordnet sein. Dieses Fenster 3 ist mit einer luftdurchlaessigen Schutzabdeckung 7 zum Schutz der Druckausgleichsmembrane 2 vor chemischen und/oder mechanischen Beschaedigungen versehen, die auf das Schutzgehaeuse 1 aufgesetzt ist.

Bei diesen Varianten ist die Druckausgleichsmembrane 2 relativ lose mit den entsprechenden Kanten des Schutzgehaeuses 1 verbunden, sodass die Druckausgleichsmembrane 2 nicht eingespannt ist und ihren Verschiebungen beim Druckausgleich zufolge einem Druckungleichgewicht zwischen Aussen- und Innenraum praktisch keinen Widerstand entgegensetzt.

Bei einer 2. Art einer Druckausgleichseinrichtung (Fig. 4) ist die Druckausgleichsmembrane 2 sackartig geformt und zwei ihrer Exemplare sind in eine Baugruppe, welche als ein Trog 4 ausgebildet ist, lose haengend mit der Sackoeffnung nach oben eingesetzt, wobei ihre einen Seiten 2.1 an den Innenraum und ihre anderen Seiten 2.2 an den Aussenraum des Schutzgehaeuses 1 grenzen. Diese trogfoermige Baugruppe ist mit dem Schutzgehaeuse 1 dicht verbunden, wobei in dessen Wand im Innenbereich der trogfoermigen Baugruppe eine Oeffnung O vorgesehen ist. Es kann aber auch die sackfoermige Druckausgleichsmembrane 2 mit ihrer Sackoeffnung nach unten lose haengend in den Trog eingesetzt sein.

Bei einer 3. Art (Fig. 5) einer Druckausgleichseinrichtung ist die Druckausgleichsmembrane 2 sackartig geformt, ueber einen aus dem Schutzgehaeuse 1 ragenden Lastarm 5.2 einer in dem Schutzgehaeuse 1 angeordneten und mit diesem verbundenen Messzelle 5.1 gestuelpt und mit den Kanten der Durchfuehrungsoeffnung des Schutzgehaeuses 1 dichtend verbunden. Auch hier soll die Druckausgleichsmembrane 2 lose haengend ueber den Lastarm der Messzelle gestuelpt sein, damit auch kleinste Druckunterschiede zwischen beiden Seiten der Druckausgleichsmembrane 2 ausgeglichen werden koennen. Darueberhinaus erfuellt diese Variante noch eine zweite Funktion : sie ist gleichzeitig eine Dichtungsmembrane.

Bei einer 4. Art (Fig. 6) einer Druckausgleichseinrichtung ist die Druckausgleichsmembrane 2 scheibenfoermig ausgebildet und je zwischen einander entsprechende Membranehalteringe 6.1 geklemmt, welche eine Art Batterie bilden. In den Membranehalteringen 6.1 sind Bohrungen 6.2 vorgesehen, welche abwechselnd von Membranehaltering zu Membranehaltering 6.1 mit der Aussen- bzw. mit der Innenseite des Schutzgehaeuses 1 verbunden sind, zwischen welchen der Druckausgleich stattfinden soll. Es kann aber auch jeder Membranhaltering 6.1 eine in ihn lose haengend eingesetzte Druckausgleichsmembrane 2 aufweisen. Wesentlich bei diesen Varianten ist, dass wenigstens einem Membranhaltering 6.1 eine lose haengende Druckausgleichsmembrane 2 zugeordnet ist, welche den Innenraum I vom Aussenraum A des Schutzgehaeuses 1 trennt.

Darueberhinaus ist bei allen Arten wesentlich, dass die wirksame Flaeche der Druckausgleichsmembrane 2 relativ gross ist gegenueber den Abmessungen des Schutzgehaeuses 1 und dass ihr Material besonders biegeweich ist, sodass sie auch auf die kleinsten Druckdifferenzen zwischen Aussen- und Innenraum des Schutzgehaeuses 1 durch eine Deformation ohne wesentliche Gegenkraefte zufolge derselben anspricht. Bei gewissen Ausfuehrungsformen von Waagen soll das Verhaeltnis zwischen der Druckdifferenz ohne eine Druckausgleichsmembrane und der Druckdifferenz mit einer Druckausgleichsmembrane, um besonders hohe Waegegenauigkeiten zu erreichen, insbesondere mehrere Hundert betragen. Der Vorteil der 2. bzw. der 4. Art liegt darin, dass Druckausgleichsmembranen 2 in Form von Batterien angeordnet werden koennen und somit eine sehr hohe Wirksamkeit aufweisen. Insbesondere, da sich jede einzelne Membrane nur sehr wenig verformen muss, um zum Druckausgleich beizutragen. Dadurch sind auch die inneren Gegenkraefte [der innere Widerstand] an jeder einzelnen sich verformenden und spannenden Druckausgleichsmembrane besonders gering.

Die Dimensionierung der Druckausgleichsmembrane hängt von mehreren Faktoren ab, beispielsweise von der Anzeigeauflösung der Waage, vom verwendeten Membranmaterial und von den erwarteten Luftdruckschwankungen. Eine Waage mit einer Anzeigeauflösung (kleinster Anzeigeschritt) von 0,1 g (Gramm) wurde mit einer Druckausgleichsmembrane versehen, die eine wirksame Fläche von ca. 6,000 mm² aufweist. In anderen Fällen mag eine wirksame Fläche von 300...400 mm² genügen.

Die erfindungsgemässe Druckausgleichsmembrane ist insbesondere für solche Wägezellen bedeutsam, bei denen eine im wesentlichen horizontal angeordnete Membran den Durchtritt eines Lastaufnehmers in die Zelle abdichtet: Luftdruckänderungen wirken sich als vertikale Störkraft aus, die das Wägeergebnis verfälscht.

Dieser Effekt tritt naturgemäss umso stärker in Erscheinung, je höher die Anzeigeauflösung der betreffenden Waage ist; was bei einem kleinsten Anzeigeschritt von 1 g noch nicht "ins Gewicht fallen" mag, kann sich bei einem Anzeigeschritt von beispielsweise 0,1 g schon durchaus störend auswirken.

## Patentansprüche

1. Durch ein Schutzgehäuse gekapselte Wägezelle mit einer am Schutzgehäuse angeordneten, dieses im wesentlichen abdichtenden Druckausgleichseinrichtung zur Neutralisierung eines Ueber- oder Unterdruckes innerhalb des Schutzgehäuses gegenüber deren Aussenraum, dadurch gekennzeichnet, dass die Druckausgleichseinrichtung wenigstens eine Membrane [2] umfasst, die aus extrem biegeweichem Material besteht und ohne Vorspannung montiert ist, wobei die wirksame Membranfläche wenigstens 300 mm² beträgt.

2. Wägezelle nach Anspruch 1, dadurch gekennzeichnet, dass die Druckausgleichseinrichtung eine an das Schutzgehäuse (1) der Wägezelle innen oder aussen anbaubare Baugruppe ist, welche wenigstens eine Membrane (2) vor mechanischen und/oder chemischen Beschädigungen geschützt aufweist.

3. Wägezelle nach Anspruch 2, dadurch gekennzeichnet, dass die Baugruppe, welche die Membrane (2) enthaelt, als ein Trog (4) mit wenigstens einer in diesen lose hängend eingesetzten, sackförmigen Membrane (2) ausgebildet ist, wobei ihre einen Seiten (2.1) an den Innenraum (1) und ihre anderen Seiten (2.2) an den Aussenraum (A) des Schutzgehäuses (1) grenzen.

4. Wägezelle nach Anspruch 3, dadurch gekennzeichnet, dass die Membrane (2) im Trog (4) mit der Oeffnung nach oben oder unten im wesentlichen lose hängend eingesetzt ist.

5. Wägezelle nach Anspruch 2, dadurch gekennzeichnet, dass die die Membrane (2) enthaltende Baugruppe als wenigstens ein Membranehaltering (6.1) ausgebildet ist, wobei jeder Membranehaltering (6.1) eine Membrane (2) aufweist, welche den Innenraum (1) vom Aussenraum (A) des Schutzgehäuses (1) trennt.

6. Wägezelle nach Anspruch 1, dadurch gekennzeichnet, dass die Membrane (2) am Schutzgehäuse (1) eine Oeffnung desselben abdeckend angeordnet ist, wobei die Membrane (2) mit einer mechanischen Schutzeinrichtung (7) umgeben ist.

7. Wägezelle nach Anspruch 1, dadurch gekennzeichnet, dass die Membrane (2) gleichliegende Oeffnungen des Schutzgehäuses (1) verbindet, wobei die Konturfläche der Membrane (2) wenigstens teilweise das Schutzgehäuse (1) durchdringt und so deren Innenraum (1) von deren Aussenraum (A) trennt.

8. Wägezelle nach Anspruch 1, dadurch gekennzeichnet, dass die Membrane (2) als Abdeckung der Einrichtung zur Einleitung der zu messenden Kraft auf die Messzelle ausgebildet ist.

## Claims

1. A weighing cell enclosed by a protective housing and having a pressure compensating device which is arranged on the protective housing and which substantially seals the protective housing off, for the neutralisation of an increased or a reduced pressure within the protective housing relative to the outside thereof, characterised in that the pressure compensating device includes at least one membrane (2) which comprises extremely flexurally soft material and which is mounted without prestressing, wherein the effective membrane surface area is at least 300 mm².

2. A weighing cell according to claim 1 characterised in that the pressure compensating device is a structural group which can be fitted to the protective housing (1) of the weighing cell on the inside or the outside and which has at least one membrane (2) protected from mechanical and/or chemical damage.

3. A weighing cell according to claim 2 characterised in that the structural group which includes the membrane (2) is in the form of a box (4) with at least one bag-like membrane (2) fitted into the box in loosely hanging relationship, wherein the one sides (2.1) of the membrane adjoin the interior (I) of the protective housing (1) and the other sides (2.2) of the membrane adjoin the atmosphere (A) outside the protective housing (1).

4. A weighing cell according to claim 3 characterised in that the membrane (2) is fitted in the box (4) with the opening upwardly or downwardly in substantially loosely hanging relationship.

5. A weighing cell according to claim 2 characterised in that the structural group which includes the membrane (2) is in the form of at least one membrane holding ring (6.1), wherein each membrane holding ring (6.1) has a membrane (2) which separates the interior (I) of the protective housing (1) from the atmosphere (A) outside same.

6. A weighing cell according to claim 1 characterised in that the membrane (2) is arranged on the protective housing (1) in such a way as to cover over an opening therein, wherein the membrane (2) is enclosed by a mechanical protection means (7).

7. A weighing cell according to claim 1 characterised in that the membrane (2) connects aligned openings in the protective housing (1), wherein the contour surface of the membrane (2) at least partially passes through the protective housing (1) and thus separates the interior (I) thereof from the atmosphere (A) outside same.

8. A weighing cell according to claim 1 characterised in that the membrane (2) is in the form of a cover means for the device for applying the force to be measured to the measuring cell.

## Revendications

1. Cellule de pesée encapsulée dans un boîtier de protection et comprenant un dispositif d'équilibrage de pression disposé sur le boîtier de protection et rendant celui-ci sensiblement hermétique pour neutraliser une surpression ou une dépression à l'intérieur du boîtier de protection par rapport à son espace ambiant, caractérisée en ce que le dispositif d'équilibrage de pression comprend au moins une membrane (2) qui est en matière extrêmement souple et montée sans précontrainte, la surface efficace de la membrane étant d'au moins 300 mm².

2. Cellule de pesée selon la revendication 1, caractérisée en ce que le dispositif d'équilibrage de pression est un module se montant intérieurement ou extérieurement sur le boîtier de protection (1) de la cellule de pesée et comprenant au moins une membrane (2) protégée contre les détériorations mécaniques et/ou chimiques.

3. Cellule de pesée selon la revendication 2, caractérisée en ce que le module qui comprend la membrane (2) est conformé en auge (4) dans laquelle au moins une membrane en forme de sac (2) est installée en étant suspendue librement, l'un (2.1) de ses côtés confinant au volume intérieur (1) et son autre côté (2.2) confinant à l'espace extérieur (A) du boîtier de protection (1).

4. Cellule de pesée selon la revendication 3, caractérisée en ce que la membrane (2) est montée dans l'auge (4) en étant suspendue sensiblement librement de manière que l'ouverture soit tournée vers le haut ou vers le bas.

5. Cellule de pesée selon la revendication 2, caractérisée en ce que le module comprenant la membrane (2) est conformé en au moins un anneau (6.1) de retenue de membrane, chaque anneau (6.1) de retenue de membrane comprenant une membrane (2) qui sépare le volume intérieur (1) de l'espace extérieur (A) du boîtier de protection (1).

6. Cellule de pesée selon la revendication 1, caractérisée en ce que la membrane (2) est disposée sur le boîtier de protection (1) de manière à recouvrir une ouverture de ce dernier, la membrane (2) étant entourée d'un dispositif mécanique de protection (7).

7. Cellule de pesée selon la revendication 1, caractérisée en ce que la membrane (2) relie des ouvertures du boîtier de protection (1) situées sur le même côté, la surface du contour de la membrane (2) pénétrant au moins partiellement dans le boîtier de protection (1) et en séparant ainsi son volume intérieur (1) de son espace extérieur (A).

8. Cellule de pesée selon la revendication 1, caractérisée en ce que la membrane (2) est conformée en élément de couverture du dispositif de transmission de la force à mesurer à la cellule de mesure.
